# EUROPÄISCHE PATENTANMELDUNG

(11) **EP 2 023 550 A1**
(43) Veröffentlichungstag der Anmeldung: **11.02.2009**
(21) Anmeldenummer: 07015782.1
(22) Anmeldetag: 10.08.2007
(51) Int. Cl.: H04L 12/56

(54) **Verfahren zum Übertragen von Daten über einen Übertragungskanal, Kommunikationsnetzwerk und Computerprogrammprodukt**

(71) Anmelder: SIEMENS AKTIENGESELLSCHAFT, 80333 München (DE); Technische Universität Berlin, 10623 Berlin (DE)
(72) Erfinder: Albayrak, Sahin, 14195 Berlin (DE); Andersen, Frank-Uwe, 10625 Berlin (DE); Coskun, Gökhan, 10557 Berlin (DE); Elkotob, Mouslim, 10589 Berlin (DE); Fan, Changpeng, 10557 Berlin (DE); Musial-Bright, Adam, 13355 Berlin (DE); Toker, Ahmet Cihat, 10587 Berlin (DE); Wepiwé, Giscard, 10553 Berlin (DE)

(57) **Zusammenfassung**

Die Erfindung betrifft ein Verfahren zum Übertragen von Daten über einen Übertragungskanal zwischen einem Netzknoten (DQ) und einem mobilen Endgerät (UE) in einem, insbesondere auf dem Internet-Protokoll basierenden, Kommunikationsnetzwerk. Einer zentralen Entscheidungslogik (AQS) des Kommunikationsnetzwerks wird zumindest ein erster, dem Netzknoten (DQ) zugeordneter Dienstgüte-Parameter zugeführt und der zentralen Entscheidungslogik (AQS) wird zumindest ein zweiter, dem Endgerät (UE) zugeordneter Dienstgüte-Parameter zugeführt. Die zentrale Entscheidungslogik (AQS) ermittelt durch die Verarbeitung des zumindest einen ersten und des zumindest einen zweiten Dienstgüte-Parameters, welcher oder welche Datenübertragungsparameter für eine Datenübertragung zwischen dem Netzknoten (DQ) und dem Endgerät (UE) verwendet werden soll oder sollen. Der oder die Datenübertragungsparameter werden an einen in dem Übertragungskanal angeordneten Transcoder (TCS) übertragen, welcher unter Verwendung des oder der Datenübertragungskanal Daten von dem Netzknoten (DQ) entgegennimmt und entsprechend des oder der Datenübertragungsparameter an das mobile Endgerät (UE) transformiert und weiterleitet.

## Beschreibung

Die Erfindung betrifft ein Verfahren zum Übertragen von Daten über einen Übertragungskanal zwischen einem Netzknoten und einem mobilen Endgerät in einem Kommunikationsnetzwerk. Die Erfindung betrifft weiter ein Kommunikationsnetzwerk sowie ein Computerprogrammprodukt.

Kommunikationsnetzwerke weisen zum Teil heterogene Zugangstechnologien auf. Insbesondere existieren Zugangsrechner zu einem Zugangsnetzwerk des Kommunikationsnetzwerks, welche auf unterschiedlichen Kommunikationstechnologien basieren oder mit unterschiedlichen Ressourcen ausgestattet sind. Darüber hinaus weisen mobile Endgeräte, welche sich zum Datenaustausch mit dem Kommunikationsnetzwerk verbinden, unterschiedliche Eigenschaften hinsichtlich ihrer Übertragungstechnologien, der verwendeten Übertragungsprotokolle sowie der Ressourcen auf.

Um die nahtlose Nutzung von Diensten in Kommunikationsnetzwerken der vierten Generation zu bewerkstelligen, sind sog. Multimode Mobile Devices vorgesehen, d.h. Endgeräte, welche von einer Zugangstechnologie zu einer anderen Zugangstechnologie umschalten können, wenn dies erforderlich ist. Dieses Umschalten wird auch als "Handover" bezeichnet. Im Rahmen einer solchen Umschaltung kann ein mobiles Endgerät z.B. von einem vorher genutzten Zugangsrechner abgekoppelt und mit einem neuen Zugangsrechner verbunden werden. Wenn die beiden Zugangsrechner unterschiedliche Datenübertragungstechnologien nutzen, kann die Verbindungsqualität nach dem Umschalten von dem einen Zugangsrechner zu dem anderen Zugangsrechner beträchtlich variieren.

Grundsätzlich sind Schwankungen der Dienstgüte (Quality of Service, QoS) in einem Kommunikationsnetzwerk weit verbreitet. Die Schwankungen treten z.B. auf, sobald Handover-Operationen der beschriebenen Art ausgeführt werden oder sich die Zustände in einem Übertragungskanal ändern. Die Schwankung der Dienstgüte kann hierbei die Nutzung des mobilen Endgeräts beeinträchtigen, z.B. wenn mit dem mobilen Endgerät von einem Netzknoten des Kommunikationsnetzwerks große Datenmengen ausgetauscht werden.

Um den Schwankungen der Dienstgüte zu begegnen, sind sog. end-to-end Dienstgüte-Anpassungen auf Applikationsebene bekannt. Hierbei adaptiert eine auf dem mobilen Endgerät laufende Anwendung ihren Betriebszustand, um den Schwankungen der Dienstgüte zu begegnen. Solche Anpassungen können eine Beeinflussung der empfangenen Daten oder Änderungen einer Bandbreite in Folge von Änderungen einer Datenrate oder -auflösung sein.

Ein solches Vorgehen erfordert jedoch von Seiten des mobilen Endgeräts einen hohen Rechenaufwand. Darüber hinaus sind die Schwankungen und die Anpassung der Dienstgüte für einen Nutzer des Endgeräts unmittelbar erfahrbar und werden als störend wahrgenommen.

Es ist daher Aufgabe der vorliegenden Erfindung, ein Verfahren zum Übertragen von Daten über einen Übertragungskanal zwischen einem Netzknoten und einem mobilen Endgerät in einem Kommunikationsnetzwerk anzugeben, in welchem die Anpassung der Dienstgüte auf einfachere und effizientere Weise durchgeführt werden kann. Eine weitere Aufgabe der Erfindung besteht darin, ein Kommunikationsnetzwerk anzugeben, welches die Anpassung der Dienstgüte auf einfachere und effizientere Weise erlaubt. Ferner soll ein Computerprogrammprodukt angegeben werden.

Diese Aufgaben werden durch die Merkmale der unabhängigen Ansprüche gelöst. Vorteilhafte Ausführungsformen sind in den abhängigen Patentansprüchen wiedergegeben.

Bei dem erfindungsgemäßen Verfahren wird einer zentralen Entscheidungslogik des Kommunikationsnetzwerks zumindest ein erster, dem Netzknoten zugeordneter Dienstgüte-Parameter zugeführt. Der zentralen Entscheidungslogik wird zumindest ein zweiter, dem Endgerät zugeordneter Dienstgüte-Parameter zugeführt. Die zentrale Entscheidungslogik ermittelt durch die Verarbeitung des zumindest einen ersten und zumindest einen zweiten Dienstgüte-Parameters, welcher oder welche Datenübertragungs-Parameter für eine Datenübertragung zwischen dem Netzknoten und dem Endgerät verwendet werden soll oder sollen. Der oder die Datenübertragungsparameter werden an einen in dem Übertragungskanal angeordneten Transcoder übertragen, welcher unter Verwendung des oder der Datenübertragungs-Parameter Daten von dem Netzknoten entgegennimmt und entsprechend des oder der Datenübertragungs-Parameter an das mobile Endgerät transformiert und weiterleitet.

Die Erfindung schlägt damit ein netzwerk-zentrisches Verfahren vor, um Anpassungen einer Netzwerk-Dienstgüte zu vorzunehmen. Hierzu verfügt das Kommunikationsnetzwerk über eine zentrale Entscheidungslogik, der die Dienstgüte-Parameter der bei einer Datenübertragung beteiligten Komponenten, dem Netzknoten und dem mobilen Endgerät, zugeführt werden. Aus diesen Informationen ermittelt die zentrale Entscheidungslogik dann optimale Datenübertragungs-Parameter, welche an einen in dem Übertragungskanal zwischen dem Netzknoten und dem mobilen Endgerät angeordneten Transcoder zur Ausführung übertragen werden. Dies bedeutet, dass die Entscheidungslogik den Transcoder steuert, indem diesem der oder die Datenübertragungs-Parameter für zumindest einen Teilabschnitt des Übertragungskanals vorgegeben wird oder werden. Das Verarbeiten des zumindest einen ersten und des zumindest einen zweiten Dienstgüte-Parameters ist z.B. in der Form eines Abgleichs der Dienstgüte-Parameter realisiert. Hierbei wird ermittelt, welcher Datenübertragungs-Parameter am Besten dem zumindest einen zweiten Dienstgüte-Parameter entspricht. So kann beispielsweise ein zu verwendender Codec an die dem mobilen Endgerät zur Verfügung stehende Bandbreite angepasst werden.

Das netzwerk-unterstützte Transcodieren der von dem Netzknoten zu dem mobilen Endgerät übertragenen Daten ist mit Hilfe eines verteilten Systems realisiert. In einem auf dem Internet-Protokoll basierenden Kommunikationsnetzwerk überträgt und transcodiert der Transcoder Daten, z.B. Audio- und/oder Videoströme. In diesem Konzept ist die Entscheidungslogik von der ausführenden Komponente, dem Transcoder, getrennt.

Gemäß einer Ausgestaltung umfasst der Datenübertragungsparameter einen Codec, in welchen die an das Endgerät zu übertragenden Daten von dem Transcoder gewandelt werden sollen. Der Datenübertragungs-Parameter kann ferner eine Bitfehlerrate für die Übertragung der Daten zu dem Endgerät umfassen.

In einer weiteren Ausgestaltung transformiert der Transcoder unter Steuerung der Entscheidungslogik einen insbesondere von dem Netzknoten verwendeten, ersten Codec in einen, insbesondere von dem Endgerät verwendeten, zweiten Codec.

In einer weiteren Ausbildung überträgt der Netzknoten den zumindest einen ersten Dienstgüte-Parameter an den Transcoder, der diesen an die Entscheidungslogik weiterleitet. Hierbei kann der einen Endpunkt der Kommunikation darstellende Netzknoten das Netzwerk, d.h. die Entscheidungslogik, über seine Bereitschaft informieren, Adaptionen der Dienstgüte zu akzeptieren und ferner innerhalb welchen Bereichs die Adaptionen für ihn akzeptabel sein können. Die Adaptionen selbst werden jedoch durch das Netzwerk gesteuert (Entscheidungslogik) und ausgeführt (Transcoder).

Der zumindest eine erste Dienstgüte-Parameter umfasst zumindest einen Codec der Datenübertragung und/oder einen jeweiligen Codec-Typ der Datenübertragung und/oder eine Bitrate der Datenübertragung.

Ein zentrales Netzwerkmanagementsystem ermittelt den zumindest einen zweiten Dienstgüte-Parameter des Endgeräts und leitet diesen an die Entscheidungslogik weiter. Ein aktives Übersenden des anderen Endpunkts des Übertragungskanals an das Netzwerk ist damit nicht notwendig, aber natürlich denkbar. Vielmehr sind die, das mobile Endgerät betreffenden, für eine Datenübertragung relevanten Dienstgüte-Parameter dem Netzwerk und hier dem Netzwerkmanagementsystem bereits bekannt, welche die Daten der Entscheidungslogik für eine weitere Ausführung zuführen kann.

Der zumindest eine zweite Dienstgüte-Parameter umfasst zumindest einen Codec der Datenübertragung und/oder eine Dienstgüteklasse der Datenübertragung und/oder eine zur Verfügung stehende Bandbreite der Datenübertragung.

In einer weiteren Ausgestaltung des Verfahrens erfolgt eine Anpassung des Datenübertragungsparameters, sobald sich einer des zumindest einen ersten und/oder zweiten Dienstgüteparameters ändert. Die Änderung eines der Dienstgüte-Parameter kann beispielsweise durch den Netzknoten und/oder das mobile Endgerät an die Entscheidungslogik signalisiert werden.

In einer anderen Ausgestaltung erfolgt in definierten Abständen eine Überprüfung, ob der Datenübertragungsparameter verändert werden soll oder muss. Die Überprüfung kann beispielsweise durch die Entscheidungslogik vorgenommen werden. Dies kann beispielsweise dadurch geschehen, dass der Netzknoten und/oder das Endgerät den ersten und/oder zweiten Dienstgüte-Parameter in regelmäßigen Abständen an die Entscheidungslogik übertragen. Nach Erhalt der entsprechenden Dienstgüte-Parameter kann die Entscheidungslogik eine Verarbeitung vornehmen und überprüfen, ob eine Anpassung des Datenübertragungsparameters notwendig ist.

In einer weiteren Ausgestaltung ist vorgesehen, dass eine Anpassung des Datenübertragungs-Parameters oder eine Überprüfung des Datenübertragungs-Parameters erfolgt, wenn das Endgerät von einem ersten Zugangsrechner zu einem zweiten Zugangsrechner des Kommunikationsnetzes mit optional unterschiedlichen Datenübertragungstechnologien wegfällt.

Ein erfindungsgemäßes Kommunikationsnetzwerk umfasst ein Zugangsnetzwerk mit zumindest einem Zugangsrechner, welches durch ein zentrales Netzwerkmanagementsystem verwaltet wird. Ein mobiles Endgerät ist über einen der Zugangsrechner zum Datenaustausch mit dem Kommunikationsnetzwerk verbunden. Ein Daten bereitstellender Netzknoten kann die Daten über einen Übertragungskanal an das Endgerät übertragen. Es ist eine zentrale Entscheidungslogik vorgesehen, der zumindest ein erster, dem Netzknoten zugeordneter Dienstgüte-Parameter und zumindest ein zweiter, dem Endgerät zugeordneter Dienstgüte-Parameter zuführbar ist, wobei die Entscheidungslogik dazu ausgebildet ist, den zumindest einen ersten und den zumindest einen zweiten Dienstgüte-Parameter zu verarbeiten und zu ermitteln, welcher oder welche Datenübertragungs-Parameter für eine Datenübertragung zwischen dem Netzknoten und dem Endgerät verwendet werden soll oder sollen. Ein in dem Übertragungskanal angeordneter Transcoder, an welchen der oder die Datenübertragungs-Parameter übertragen werden können, ist dazu ausgebildet, unter Verwendung des oder der Datenübertragungs-Parameter Daten von dem Netzknoten entgegenzunehmen und entsprechend des oder der Datenübertragungs-Parameter an das mobile Endgerät zu transformieren und weiterzuleiten.

Das erfindungsgemäße Kommunikationsnetzwerk weist die gleichen Vorteile auf, wie sie vorstehend in Verbindung mit dem Verfahren erläutert wurden.

In einer Weiterbildung der Erfindung ist der Transcoder in dem Zugangsnetzwerk des Kommunikationsnetzwerks angeordnet. Die Entscheidungslogik ist demgegenüber in einem Core-Netzwerk, dem Kernnetzwerk, angeordnet. Durch diese Aufteilung von Entscheidungslogik und ausführender Komponente, dem Transcoder, ist bewirkt, dass die Entscheidungslogik in dem Kommunikationsnetzwerk lediglich einmalig vorgesehen werden braucht. Der Transcoder in dem Zugangsnetzwerk kann beispielsweise in der sog. letzten Meile oder dem sog. "Home Gateway" angeordnet sein. Die Entscheidungslogik kann in einem sog. Quality of Service-Server des Core-Netzwerks angeordnet sein, welches von dem Provider verwaltet wird.

Von der Erfindung ist ferner ein Computerprogrammprodukt umfasst, das direkt in den internen Speicher eines digitalen Computers geladen werden kann und Softwarecodeabschnitte umfasst, mit denen die Schritte des vorstehend beschriebenen Verfahrens ausgeführt werden, wenn das Produkt auf einem Computer läuft.

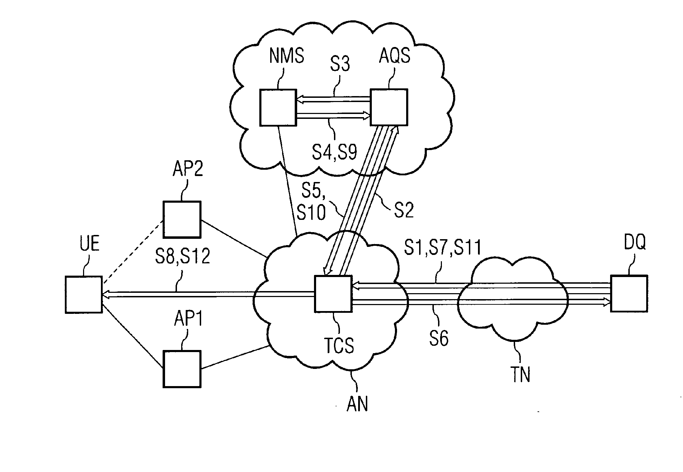

Die Erfindung wird nachfolgend näher anhand eines Ausführungsbeispiels beschrieben. Die einzige Figur zeigt in schematischer Darstellung ein erfindungsgemäßes Kommunikationsnetzwerk.

Das Kommunikationsnetzwerk umfasst ein Zugangsnetzwerk AN, das lediglich beispielhaft mit zwei Zugangsrechners AP1, AP2 versehen ist. Das Zugangsnetzwerk AN ist über ein Übertragungsnetzwerk TN mit einem Netzknoten DQ verbunden, der beispielsweise eine Anwendung zum Streamen von Daten (Audio, Video, usw.) umfasst. Die Daten können in einem beliebigen Codec vorliegen. Das Zugangsnetzwerk AN steht ferner mit einem zentralen Netzwerk, dem Core-Netzwerk CN, in Verbindung, welches durch einen Provider verwaltet wird und ein Netzwerkmanagementsystem NMS und eine Entscheidungslogik AQS aufweist, die beispielsweise in einem adaptiven QoS-Server ausgebildet sein kann.

Ein mobiles Endgerät UE kann zum Datenaustausch mit dem Kommunikationsnetzwerk eine Kommunikationsverbindung wahlweise zu dem Zugangsrechner AP1 oder AP2 herstellen. Bewegt sich das mobile Endgerät UE, so kann dieses zunächst mit dem Zugangsrechner AP1 und zu einem späteren Zeitpunkt mit dem Zugangsrechner AP2 in einer Kommunikationsverbindung stehen, wie dies in der Figur durch die strichlierte Linie zwischen dem mobilen Endgerät UE und dem Zugangsrechner AP2 angedeutet ist.

Das das Zugangsnetzwerk verwaltende Netzwerkmanagementsystem NMS ist mit der Anmeldung des mobilen Endgeräts UE an einem der Zugangsrechner AP1, AP2 über die vorliegenden Dienstgüte-Parameter, insbesondere die möglichen Codecs der Datenübertragung, die gewünschten Dienstgüteklassen der Datenübertragung, sowie eine zur Verfügung stehende Bandbreite der Datenübertragung, informiert. Dies kann z.B. dadurch realisiert sein, dass das mobile Endgerät UE diese Informationen auf Anfrage des Netzwerkmanagementsystems NMS an dieses überträgt.

Der in dem Zugangsnetzwerk AN angeordnete und in einem Übertragungskanal liegende Transcoder TCS wird durch die Entscheidungslogik AQS dahingehend gesteuert, welcher Codec bei einer Datenübertragung zwischen dem Netzknoten DQ und dem mobilen Endgerät UE zu verwenden ist. Der Übertragungskanal ist der zwischen dem Netzknoten DQ und dem mobilen Endgerät UE gebildete Datenübertragungspfad durch das Kommunikationsnetzwerk. Der Aufbau dieses Übertragungskanals wird im Folgenden beispielhaft beschrieben:
In einem ersten Schritt (S1) meldet sich der Netzknoten DQ bei dem Transcoder TCS an und überträgt hierbei die für eine Datenübertragung zu dem mobilen Endgerät UE benötigten Informationen über verwendete Formate oder eine Ende-zu-Ende Streaming-Verbindung. Der Transcoder TCS leitet diese Informationen an die Entscheidungslogik AQS weiter (S2). In einem nächsten Schritt (S3) ermittelt die Entscheidungslogik AQS die zur Verfügung stehenden Netzwerkressourcen, wobei die Entscheidungslogik AQS das Netzwerkmanagementsystem NMS kontaktiert, welches diese gewünschten Informationen bereithält. In einem nächsten Schritt werden diese angeforderten Informationen von dem Netzwerkmanagementsystem MNS an die Entscheidungslogik AQS übertragen (S4). Ferner kann die Entscheidungslogik AQS überprüfen, ob eine Nutzer- oder Anwendungsregel (sog. Policy) in einer mit der Entscheidungslogik AQS verbundenen Datenbank (nicht dargestellt) existiert. Schließlich wird die Anmeldung des Netzknotens TN an dem Dienst des Transcoders akzeptiert (S5).
Bevor eine Transcodierung oder Umwandlung des von dem Netzknoten DQ an das mobile Endgerät UE zu sendenden Datenstroms erfolgen kann, werden die von dem Netzwerkmanagementsystem NMS bereitgestellten Netzwerk-Ressourceninformationen, insbesondere der Dienstgüte-Parameter des mobilen Endgeräts UE, mit den von dem Netzknoten DQ übertragenen Informationen abgeglichen. Dies ist notwendig, damit ein entsprechendes Transcoderformat (Codec) sowie eine unterstützte Bitrate ausgewählt werden können. Durch das Analysieren eventuell vorhandener Regeln und der verfügbaren Netzwerk-Ressourcen bestimmt die Entscheidungslogik AQS die bestmöglichen Datenübertragungs-Parameter für den Transcoder TCS. Dieser oder diese Datenübertragungs-Parameter werden (vgl. S6) von der Entscheidungslogik AQS an den Transcoder TCS übertragen, womit die Anmeldung des Netzknotens DQ an dem Transcoder formal bestätigt bzw. akzeptiert ist.
Das Ergebnis dieser formalen Akzeptanz kann dann von dem Transcoder TCS an den Netzknoten DQ weitergegeben werden. Der Netzknoten DQ besitzt nunmehr die Erlaubnis, den Transcoder TCS zu beanspruchen und Daten über den Übertragungskanal an das mobile Endgerät UE zu übertragen, welches zunächst mit dem Zugangsrechner AP1 verbunden ist (S7, S8).
Das Netzwerk DQ kann die an das mobile Endgerät UE zu übertragenden Daten in einem beliebigen Codec und in einer beliebigen Bitrate an den Transcoder TCS übertragen. Dieser übernimmt die Aufgabe, den Codec des Netzknotens DQ in den durch die Entscheidungslogik AQS vorgegebenen Codec und gegebenenfalls vorgegebene Bitrate des mobilen Endgeräts UE umzusetzen.
Wenn sich die eben beschriebene Situation in dem Kommunikationsnetzwerk ändert, z.B. wenn das mobile Endgerät UE nach einem Handover nunmehr eine Kommunikationsverbindung zu dem Zugangsrechner AP2 des Zugangsnetzwerks AN aufweist, überträgt das Netzwerkmanagementsystem NMS eine Nachricht an die Entscheidungslogik AQS, in welcher das Netzwerkmanagementsystem die neuen, geänderten Dienstgüte-Parameter des mobilen Endgeräts UE mitteilt (S9). Infolgedessen wird eine Rekonfiguration des Transcoders vorgenommen (S10), welche wiederum aus einer Verarbeitung des oder der Dienstgüte-Parameter des mobilen Endgeräts UE und des Netzknotens DQ resultiert. Hierdurch wird der Transcoder TCS veranlasst, den von dem Netzknoten DQ an das mobile Endgerät UE übertragenen Datenstrom unter Verwendung geänderter Datenübertragungsparameter zu transformieren. Dies kann beispielsweise im Falle einer verringerten zur Verfügung stehenden Bandbreite durch das Reduzieren der Qualität des Datenstroms erfolgen. Dies ist in der Figur durch S11, S12 gekennzeichnet.
Das erfindungsgemäße Vorgehen weist folgende Vorteile auf:
   Die Endpunkte in einer Kommunikation stellen dem Netzwerk Informationen über die von ihnen akzeptablen Bereiche von Adaptionen bezüglich der Dienstgüte bereit. Das Netzwerk ist in der Lage, innerhalb der vorgegebenen Grenzen einen optimierten Datenübertragungs-Parameter zu ermitteln und zur Ausführung zu bringen. Dies kann während der Laufzeit der Datenübertragung erfolgen. Auf diese Weise ist es möglich, Präferenzen und Regeln eines Netzwerkbetreibers zu berücksichtigen. Hierbei ist es möglich, Betreiber-spezifische Anpassungen auszuführen.
   Das hierbei zu Grunde liegende Prinzip besteht in der Trennung einer Entscheidungs- und Ausführungslogik beim Transcodieren der von dem Netzknoten zu dem mobilen Endgerät übertragenen Daten. Darüber hinaus ist eine Koordination durch die Entscheidungslogik, welche in einem sog. adaptiven Quality of Service-Server vorgesehen sein kann, und das Netzwerkmanagementsystem, das ein Zugangsnetzwerk verwaltet, vorgesehen. Die Aufspaltung der Entscheidungs- und Ausführungslogik des Transcodierens macht es möglich, zwei in ihren Funktionen getrennte Einheiten vorzusehen, die jeweils hinsichtlich ihrer Skalierbarkeit und Performance optimiert werden können. Die Koordinierung des Verfahrens durch die Entscheidungslogik und das Netzwerkmanagementsystem ermöglicht zielgerichtete Entscheidungen, die auf Echtzeit-Situationen des Kommunikationsnetzwerks basieren können.

### Bezugszeichenliste

- DQ: Netzknoten
- UE: Endgerät
- CN: zentrales Netzwerk (Core Netzwerk)
- AN: Zugangsnetzwerk
- AP1: Zugangsrechner
- AP2: Zugangsrechner
- NMS: Netzwerkmanagementsystem
- AQS: Entscheidungslogik
- TCS: Transcoder
- TN: Übertragungsnetzwerk
- S1, ..., S12: Datenübertragung

## Patentansprüche

1. Verfahren zum Übertragen von Daten über einen Übertragungskanal zwischen einem Netzknoten (DQ) und einem mobilen Endgerät (UE) in einem, insbesondere auf dem Internet-Protokoll basierenden, Kommunikationsnetzwerk, bei dem
- einer zentralen Entscheidungslogik (AQS) des Kommunikationsnetzwerks zumindest ein erster, dem Netzknoten (DQ) zugeordneter Dienstgüte-Parameter zugeführt wird,
- der zentralen Entscheidungslogik (AQS) zumindest ein zweiter, dem Endgerät (UE) zugeordneter Dienstgüte-Parameter zugeführt wird,
- die zentrale Entscheidungslogik (AQS) durch die Verarbeitung des zumindest einen ersten und zumindest einen zweiten Dienstgüte-Parameters ermittelt, welcher oder welche Datenübertragungsparameter für eine Datenübertragung zwischen dem Netzknoten (DQ) und dem Endgerät (UE) verwendet werden soll oder sollen,
- der oder die Datenübertragungsparameter an einen in dem Übertragungskanal angeordneten Transcoder (TCS) übertragen werden, welcher unter Verwendung des oder der Datenübertragungskanal Daten von dem Netzknoten (DQ) entgegennimmt und entsprechend des oder der Datenübertragungsparameter an das mobile Endgerät (UE) transformiert und weiterleitet.

2. Verfahren nach Anspruch 1, bei dem der Datenübertragungs-parameter einen Codec umfasst, in welchen die an das Endgerät (UE) zu übertragenden Daten von dem Transcoder (TCS) gewandelt werden sollen.

3. Verfahren nach Anspruch 1 oder 2, bei dem der Datenübertragungsparameter eine Bitfehlerrate für die Übertragung der Daten zu dem Endgerät (UE) umfasst.

4. Verfahren nach einem der vorherigen Ansprüche, bei dem der Transcoder (TCS) unter Steuerung der Entscheidungslogik einen, insbesondere von dem Netzknoten (DQ) verwendeten, ersten Codec in einen, insbesondere von dem Endgerät (UE) verwendeten, zweiten Codec transformiert.

5. Verfahren nach einem der vorherigen Ansprüche, bei dem der Netzknoten (DQ) den zumindest einen ersten Dienstgüte-Parameter an den Transcoder (TCS) überträgt, der diesen an die Entscheidungslogik (AQS) weiterleitet.

6. Verfahren nach einem der vorherigen Ansprüche, bei dem der zumindest eine erste Dienstgüte-Parameter zumindest einen Codec der Datenübertragung und/oder eine jeweiligen Codec-Typ der Datenübertragung und/oder eine Bitrate der Datenübertragung umfasst.

7. Verfahren nach einem der vorherigen Ansprüche, bei dem ein zentrales Netzwerkmanagementsystem (NMS) den zumindest einen zweiten Dienstgüte-Parameter des Endgeräts (UE) ermittelt und an die Entscheidungslogik (AQS) weiterleitet.

8. Verfahren nach einem der vorherigen Ansprüche, bei dem der zumindest eine zweite Dienstgüte-Parameter zumindest einen Codec der Datenübertragung und/oder eine Dienstgüteklasse der Datenübertragung und/oder eine zur Verfügung stehende Bandbreite der Datenübertragung umfasst.

9. Verfahren nach einem der vorherigen Ansprüche, bei dem eine Anpassung des Datenübertragungsparameters erfolgt, sobald sich einer des zumindest einen ersten und/oder zweiten Dienstgüte-Parameters ändert.

10. Verfahren nach einem der vorherigen Ansprüche, bei dem in definierten Abständen eine Überprüfung erfolgt, ob der Datenübertragungsparameter verändert werden soll oder muss.

11. Verfahren nach einem der vorherigen Ansprüche, bei dem eine Anpassung des Datenübertragungsparameters oder eine Überprüfung des Datenübertragungsparameters erfolgt, wenn das Endgerät (UE) von einem ersten Zugangsrechner (AP1) zu einem zweiten Zugangsrechner (AP2) des Kommunikationsnetzes mit optional unterschiedlichen Datenübertragungstechnologien wechselt.

12. Kommunikationsnetzwerk, umfassend:
- ein Zugangsnetzwerk (AN) mit zumindest einem Zugangsrechner (AP1, AP2), welches durch ein zentrales Netzwerkmanagementsystem (NMS) verwaltet wird,
- ein mobiles Endgerät (UE), die über einen der Zugangrechner (AP1, AP2) zum Datenaustausch mit dem Kommunikationsnetzwerk verbunden ist,
- ein Daten bereitstellender Netzknoten (DQ), welche die Daten über einen Übertragungskanal an das Endgerät (UE) übertragen kann,
- eine zentrale Entscheidungslogik (AQS), der zumindest ein erster, dem Netzknoten (DQ) zugeordneter Dienstgüte-Parameter und zumindest ein zweiter, dem Endgerät (UE) zugeordneter Dienstgüte-Parameter zuführbar ist, wobei die Entscheidungslogik (AQS) dazu ausgebildet ist, den zumindest einen ersten und den zumindest einen zweiten Dienstgüte-Parameter zu verarbeiten und zu ermitteln, welcher oder welche Datenübertragungsparameter für eine Datenübertragung zwischen dem Netzknoten (DQ) und dem Endgerät (UE) verwendet werden soll oder sollen,
- einem in dem Übertragungskanal angeordneten Transcoder (TCS), an welchen der oder die Datenübertragungsparameter übertragen werden können, der dazu ausgebildet ist, unter Verwendung des oder der Datenübertragungsparameter Daten von dem Netzknoten (DQ) entgegenzunehmen und entsprechend des oder der Datenübertragungsparameter an das Endgerät (UE) zu transformieren und weiterzuleiten.

13. Kommunikationsnetzwerk nach Anspruch 12, bei dem der Transcoder (TCS) in dem Zugangsnetzwerk (AN) des Kommunikationsnetzwerks angeordnet ist.

14. Kommunikationsnetzwerk nach Anspruch 12 oder 13, bei dem die Entscheidungslogik (AQS) in einem Core Netzwerk angeordnet ist.

15. Computerprogrammprodukt, das direkt in den internen Speicher eines digitalen Computers geladen werden kann und Softwarecodeabschnitte umfasst, mit denen die Schritte gemäß einem der Ansprüche 1 bis 11 ausgeführt werden, wenn das Produkt auf einem Computer läuft.
